# EUROPEAN PATENT APPLICATION

(11) **EP 2 117 213 A1**
(43) Date of publication of application: **11.11.2009**
(21) Application number: 09159786.4
(22) Date of filing: 08.05.2009
(51) Int. Cl.: H04M 3/42

(54) **Method and system for recording conversation, conversation-recording platform, and MRBT platform**

(30) Priority: 08.05.2008 CN 200810067131; 18.12.2008 WO PCT/CN2008/073573
(71) Applicant: Huawei Technologies Co., Ltd., Longgang District, Shenzhen Guangdong 518129 (CN)
(72) Inventor: Xu, Wentao, Shenzhen Guangdong 518129 (CN); Hu, Xiaoqing, Shenzhen 518129 (CN)
(74) Representative: Thun, Clemens

(57) **Abstract**

The present invention discloses a method and a system for recording a conversation, a conversation-recording platform and an MRBT platform. The method includes: receiving a call request from a calling user; establishing a conversation connection between calling and called users according to the call request; and recording the conversation between the calling and called users during the conversation of the calling and called users. The invention has the following beneficial effects: a larger conversation file can be stored, and the conversation between terminal users may be recorded automatically.

## Description

### Field of the Invention

This application claims the benefits of Chinese Patent Application No. 200810067131.6 filed on May 8, 2008, titled "METHOD AND SYSTEM FOR RECORDING CONVERSATION, CONVERSATION-RECORDING PLATFORM, AND MRBT PLATFORM" and PCT Application PCT/CN2008/073573 filed on December 18, 2008, titled "METHOD AND SYSTEM FOR RECORDING CONVERSATION, CONVERSATION-RECORDING PLATFORM, AND MRBT PLATFORM", which are incorporated herein by reference in their entirety.

### Background of the Invention

Video phone service is a kind of multimedia communication service that integrates image and voice. Thus, a face-to-face real-time communication may be implemented, in other words, the two users of video phone can see the scene in which an opposite user exists during the video conversation.

During video phone communication or general conversation, when a calling user intends to record a segment of communication with an opposite user, for example, video/sound or classic moment between the two users, the calling user may realize it via a terminal which is used. In other words, during the conversation, the calling user presses a certain key on the terminal to trigger the terminal to initiate a process for recording a segment of communication with the opposite user.

However, during the implementation of the invention, the inventor finds that: because the capacity of a terminal is limited, it is difficult to store a longer and larger communication segment. Moreover, when recording a communication segment, the terminal user needs to manually trigger a key on the terminal to trigger conversation recording. Thus, it is prone to forget to press the key or wrongly press the key, resulting in that no conversation is recorded by the terminal user and causing unnecessary information loss.

### Summary of the Invention

Embodiments of the invention provide a method and a system for recording a conversation, a conversation-recording platform and an MRBT platform so as to store a larger conversation file, record a conversation automatically. Thus, missing a conversation is avoided.

One embodiment of the invention provides a method for recording a conversation, including:
receiving a call request initiated by a calling user;
establishing a conversation connection between the calling user and a called user according to the call request; and
recording the conversation between the calling and called users during the conversation of the calling and called users.

One embodiment of the invention provides a conversation-recording platform, including:
a receiving unit adapted to receive a call request from a calling user;
a connection unit adapted to establish a conversation connection between the calling user and a called user according to the call request; and
a recording unit adapted to record a conversation between the calling and called users during the conversation of the calling and called users.

As can be seen from above, in the technical solutions of the embodiments of the invention, a larger conversation file can be stored and the conversation between terminal users can be recorded automatically.

### Brief Description of the Drawings

Figure 1 is a flow chart of a method for recording a conversation according to one embodiment of the invention;

Figure 2 is a signaling flow chart of a method for recording a conversation according to one embodiment of the invention;

Figure 3 is a signaling flow chart of a method for recording a conversation according to one embodiment of the invention;

Figure 4 is a signaling flow chart of a method for recording a conversation according to one embodiment of the invention;

Figure 5 is a signaling flow chart of a method for recording a conversation according to one embodiment of the invention;

Figure 6 is a schematic diagram of a conversation-recording platform according to one embodiment of the invention;

Figure 7 is a schematic diagram of an MRBT platform according to one embodiment of the invention;

Figure 8 is a schematic diagram of a system for recording a conversation according to one embodiment of the invention; and

Figure 9 is a schematic diagram of a system for recording a conversation according to one embodiment of the invention.
Detailed Description of the Embodiments

The embodiments of the invention provide a method and a system for recording a conversation, a conversation-recording platform and an MRBT platform. Hence, a larger conversation file can be stored and a conversation between terminal users can be recorded automatically.

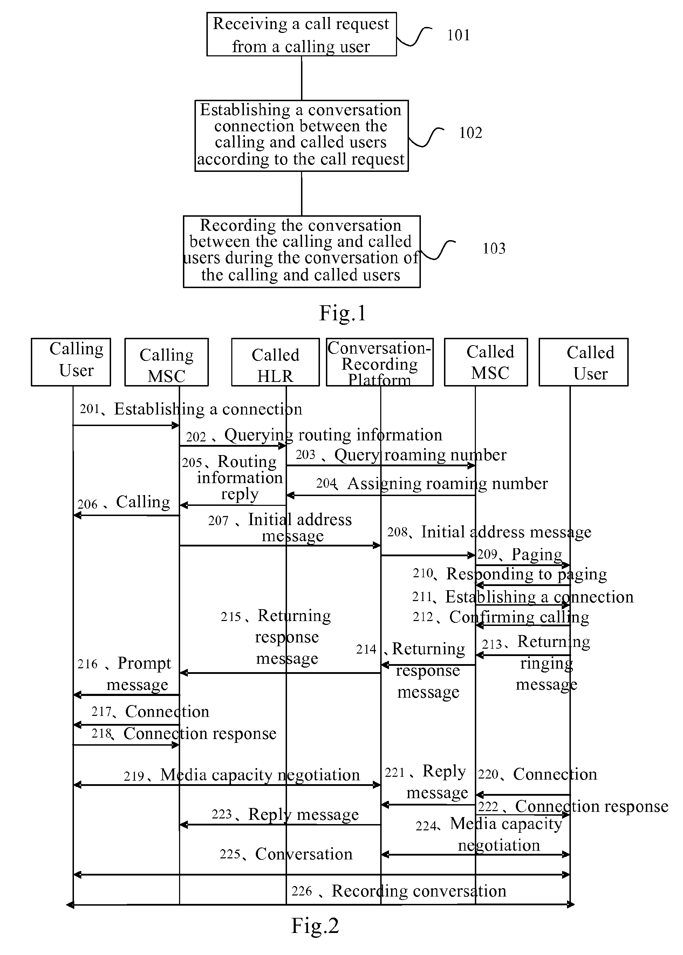

During the conversation between terminal users, when a user needs to record a segment of conversation between the calling and called users, a method for recording a conversation according to an embodiment of the invention may be used, as shown in Figure 1. The method includes the following processes.

101: A call request initiated by a calling user is received. The call request may request to establish an audio conversation or a video conversation, and is a call request sent by a Mobile Switching Center (MSC) to establish a conversation with a called terminal. The call request carries a conversation-recording service code which may be obtained by a calling MSC from a calling/called Home Location Register (HLR), or may be triggered by the calling user via dialing an access number. The access number is carried in the call request and includes a called number and the conversation-recording service code. The conversation-recording service code may be a prefix code configured before the called number, a suffix code configured behind the called number or a middle code configured in the middle of the called number. Moreover, the conversation-recording service code is not limited to a combination of numbers and may be configured as a combination of letters or other symbols as required.

102: A conversation connection is established between the calling and called users according to the call request.

103: The conversation between the calling and called users is recorded according to the conversation-recording service code, during the conversation of the calling and called users. The calling or called user may manage, for example, delete or download, etc., the recorded conversation between the calling and called users. Moreover, the call request may not carry the conversation-recording service code, in this case, the network side may record the conversation between the calling and called users automatically.

By the above method, a conversation between the calling and called users with a larger capacity may be recorded , and the conversation between the calling and called users may be recorded automatically.

Figure 2 shows a signaling flow chart of a method for recording a conversation according to one embodiment of the invention. In this embodiment, a user needs to subscribe for a conversation-recording service and the subscription information of the user is stored on corresponding HLR. This embodiment is described in the case that a conversation-recording service code is registered on the called HLR by the called user. The method has the following processes.

201: The calling MSC receives a message to establish a call connection initiated by a calling terminal.

202: The calling MSC sends Send Routing Information (SRI) to the called HLR to request the subscription information of the called user on the called HLR.

203: The called HLR sends a Provide Roaming Number (PRN) request to the called MSC to obtain Mobile Station Roaming Number (MSRN) of the called user.

204: The called MSC assigns an MSRN to the called terminal, and returns PRN reply information to the called HLR.

205: The called HLR sends SRI reply information to the calling MSC. The SRI reply information carries the conversation-recording service code and the MSRN of the called user, and the conversation-recording service code is used for indicating that the called user has subscribed for conversation-recording service.

206: The calling MSC sends Enter Call Process information to the calling user, after obtaining the MSRN of the called user.

207: The calling MSC determines that the called user is a conversation recording user according to the conversation-recording service code, and initiates an Initial Address Message (IAM) to the conversation-recording platform. The IAM may include conversation-recording service code, MSRN of the called user and IMSI of the called user.

208: The conversation-recording platform initiates an IAM to the called MSC with the MSRN of the called user.

209: The called MSC calls the called terminal.

210: The called terminal responds to the called MSC.

211: The called MSC sends a connection establishment message to the called terminal.

212: The called terminal returns a call confirmation message carrying information indicating that the conversation call can be supported.

213: The called terminal establishes a connection and starts ringing, and at the same time, returns a ringing message to the called MSC.

214: The called MSC returns a response message to the conversation-recording platform.

215: The conversation-recording platform returns a response message to the calling MSC.

216: The calling MSC sends a prompt message to the calling terminal.

217: The calling MSC sends a connection message to the calling terminal. As for the video conversation service between the calling and called users, the calling MSC instructs the calling terminal and the conversation-recording platform to perform H.245 negotiation, i.e. media capacity negotiation.

218: The calling terminal returns a connection response to the calling MSC.

219: The calling terminal and the conversation-recording platform carry out the media capacity negotiation.

220: The called terminal answers the incoming call and sends a connection message to the called MSC.

221: The called MSC sends a reply message to the conversation-recording platform.

222: The called MSC returns a connection response message to the called terminal.

223: The conversation-recording platform sends a reply message to the calling MSC and the calling MSC starts to charge the calling terminal.

224: The called terminal and the conversation-recording platform carry out the media capacity negotiation, and the audio/video channel is connected between the calling terminal and the called terminal.

225: The calling terminal and the called terminal implement the audio/video conversation, in accordance with the media format obtained by the media capacity negotiation with the conversation-recording platform.

226: The conversation-recording platform records the audio/video conversation between the calling terminal and the called terminal for the called terminal during the conversation of the calling terminal and called terminal according to the conversation-recording service code. A user which registers the conversation-recording service may enter the conversation-recording platform in a certain way (for example, via access code) to perform related manage operation, for example, downloading or deleting the recorded conversation.

By the above method, the conversation-recording platform can automatically record the conversation between the calling terminal and the called terminal for the called user, in other words, a larger conversation file may be stored on the network side, and missing a conversation due to user's misoperation is avoided.

Of course, this embodiment may also be implemented in the case that the calling terminal registers a conversation-recording service code on the calling HLR. Thus, the calling MSC obtains the conversation-recording service code registered by the calling terminal from the calling HLR, and triggers the calling MSC to send a call request to the conversation-recording platform according to the conversation-recording service code registered by the calling terminal, thereby the conversation-recording platform may record the conversation between the calling terminal and the called terminal for the calling user.

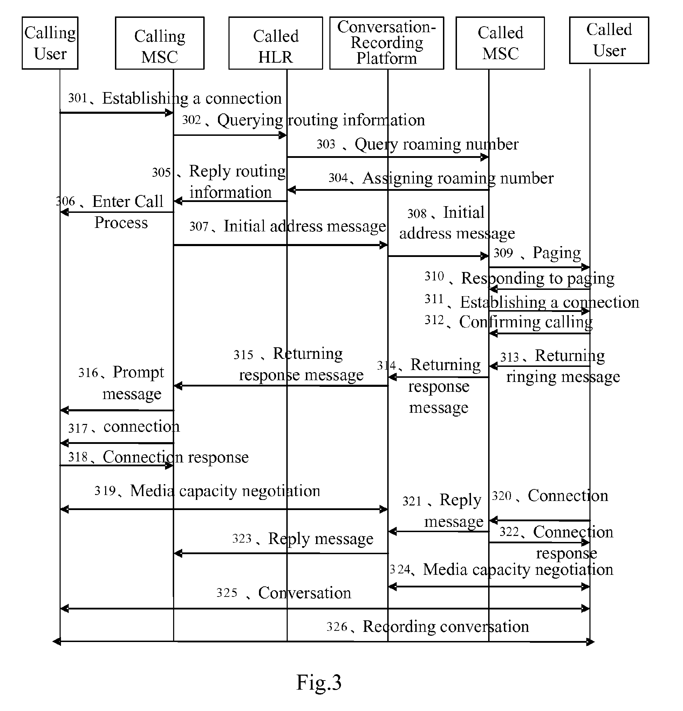

Figure 3 shows a signaling flow chart of a method for recording a conversation according to one embodiment of the invention. In this embodiment, when a calling user calls a called user, dialing an access number indicates that the user initiates a call of conversation-recording service , in other words, the access number includes a called number and the conversation-recording service code. The conversation-recording service code may be a prefix code configured before the called number (for example, a number indicating that conversation-recording service is initiated, such as 12530, is added before the called number), a suffix code configured behind the called number and a middle code configured in the middle of the called number. Moreover, the conversation-recording service code is not limited to a combination of numbers and may be configured as a combination of letters or other symbols as required.

301: The calling MSC receives a connection establishment message from the calling user. The connection establishment message is triggered through dialing the access number of the called user by the calling user. The access number includes the called number and the conversation-recording service code. The conversation-recording service code may be a prefix code configured before the called number (for example, a number indicating that conversation-recording service is initiated, such as 12530, is added before the called number), a suffix code configured behind the called number and a middle code configured in the middle of the called number. Moreover, the conversation-recording service code is not limited to a combination of numbers, and may be configured as a combination of letters or other symbols as required.

302: The calling MSC sends SRI to the called HLR to query the routing information of the called user.

303: The called HLR sends a PRN message to the called MSC to request an MSRN of the called user.

304: The called MSC assigns an MSRN to the called user and returns a PRN reply message to the called HLR.

305: The called HLR sends SRI reply information carrying the MSRN of the called user to the calling MSC.

306: The calling MSC sends Enter Call Process information to the calling terminal after obtaining the MSRN of the called terminal.

307: The calling MSC initiates an IAM message to the conversation-recording platform, when determining that the called user is a conversation recording user and expects to trigger conversation-recording service according to the conversation-recording service code dialed by the calling user. The IAM message includes conversation-recording service code, MSRN of the called user and IMSI of the calling user.

308: The conversation-recording platform determines that the calling user registers conversation-recording service and initiates an IAM to the called MSC according to the MSRN of the called user.

309: The called MSC calls the called user.

310: The called terminal responds to the called MSC.

311: The called MSC sends a connection establishment message to the called user.

312: The called terminal returns a call confirmation message carrying information indicating that the conversation call can be supported.

313: The called terminal establishes a connection and starts ringing, and returns a ringing message to the called MSC.

314: The called MSC returns a response message to the conversation-recording platform.

315: The conversation-recording platform returns a response message to the calling MSC.

316: The calling MSC sends a prompt message to the calling terminal.

317: The calling MSC sends a connection message to the calling terminal to instruct the calling user to perform H.245 negotiation i.e., media capacity negotiation with the conversation-recording platform. As for a service in which the calling and called users only performs audio conversation, media capacity negotiation between the calling/called terminal and the conversation-recording platform may not be performed.

318: The calling terminal returns a connection response to the calling MSC.

319: The calling terminal implements the media capacity negotiation with the conversation-recording platform.

320: The called terminal answers the incoming call and sends a connection message to the called MSC.

321: The called MSC sends a reply message to the conversation-recording platform.

322: The called MSC returns a connection response message to the called terminal.

323: The conversation-recording platform sends a reply message to the calling MSC, and the calling MSC starts charging for the calling terminal.

324: The called terminal and the conversation-recording platform implement media capacity negotiation, and the audio/video channel is connected between the calling terminal and the called terminal.

325: The calling terminal and the called terminal carrying out audio/video conversation according to the media format obtained after the negotiation with the conversation-recording platform.

326: The conversation-recording platform records the conversation between the calling and called users for the calling user during the conversation between the calling and called users according to the conversation-recording service code, and a user who subscribes for the conversation-recording service may enter the conversation-recording platform to manage, for example, delete or download, the audio/video conversation recorded.

By the above method, the conversation-recording platform can automatically record the audio/video conversation between the calling and called users for the calling user, in other words, an audio/video conversation file with a larger capacity may be stored on the network side. Missing an audio/video conversation due to misoperation of the calling user may also be avoided.

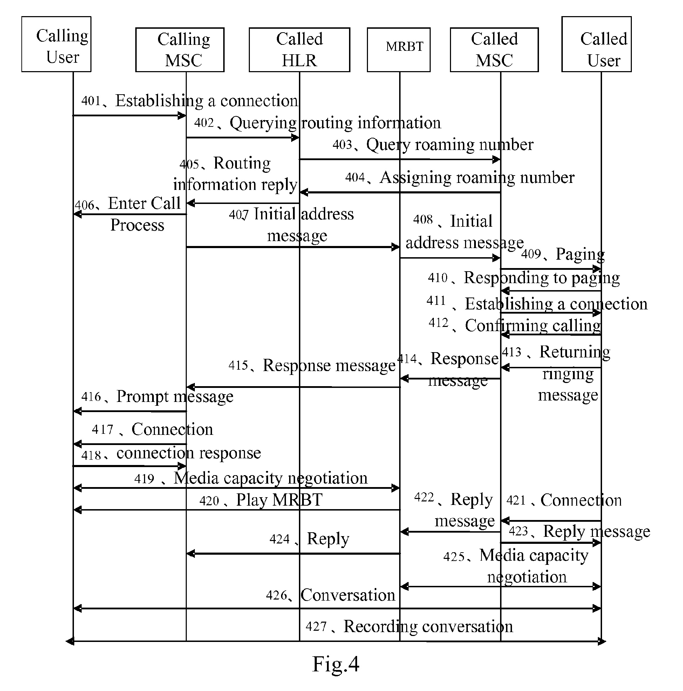

One embodiment of the invention further provides a method for recording a conversation, where the conversation may be a video conversation or an audio conversation. Figure 4 shows a signaling flow chart of this embodiment. This embodiment may be implemented by using a Multimedia Ring Back Tone (MRBT) platform as the audio/video recording platform, in other words, a service attribute for recording a conversation is added to the data base of the MRBT. It is determined whether a calling/called user registers a service for recording a conversation based on the service attribute. If it is determined that conversation-recording service is registered, a conversation between the calling and called users is triggered and the audio/video conversation between the calling terminal and the called terminal is recorded. This embodiment is illustrated in the case that the called user registers a service for recording a conversation. The method has the following processes.

401: The calling MSC receives a connection establishment message from a calling terminal.

402: The calling MSC sends an SRI to the called HLR for querying routing information.

403: The called HLR sends a PRN to the called MSC for querying MSRN.

404: The called MSC assigns an MSRN and returns PRN reply information to the called HLR.

405: The called HLR sends SRI reply information to the calling MSC. The SRI reply information carries the MSRN and an MRBT service code of the called user according to the MRBT support information indication carried in the SRI. The MRBT service code may be a multimedia MRBT service code.

406: The calling MSC sends Enter Call Process information to calling terminal, after obtaining the MSRN of the called user.

407: The calling MSC initiates an IAM to the MRBT platform when it is determined that the called user is an MRBT user according to the MRBT service code.

408: The MRBT platform initiates an IAM to the called MSC using the MSRN of the called user.

409: The called MSC calls the called terminal.

410: The called terminal responds to the called MSC.

411: The called MSC sends a connection establishment message to the called terminal.

412: The called terminal returns a call confirmation message carrying information indicating that the conversation call can be supported.

413: The called terminal establishes a connection, starts ringing, and returns a ringing message to the called MSC.

414: The called MSC returns a response message to the MRBT platform.

415: The MRBT platform returns a response message to the calling MSC.

416: The calling MSC sends a prompt message to the calling terminal.

417: For the video conversation service between the calling and called users, the calling MSC sends a connection message to the calling terminal, and instructs the calling terminal to carry out H.245 negotiation i.e. media capacity negotiation, with the MRBT platform.

418: The calling terminal returns a connection response to the calling MSC.

419: The calling terminal carries out media capacity negotiation with the MRBT platform.

420: The MRBT platform obtains a ringing tone code to be played to the calling user, plays an MRBT for the calling user, and determines whether the called user subscribes for the conversation-recording service.

421: The called terminal answers the incoming call and sends a connection message to the called MSC.

422: The called MSC sends a reply message to the MRBT platform.

423: The called MSC returns a connection response message to the called terminal.

424: The MRBT platform sends an ANM reply signaling to the calling MSC, and the calling MSC starts charging the calling terminal.

425: For the video conversation service between the calling and called users, the called terminal and the MRBT platform implement the media capacity negotiation, the MRBT platform stops playing the MRBT to the calling terminal and connects the audio/video channel between the calling terminal and the called terminal.

426: The calling terminal and the called terminal implement audio/video conversation according to the media format obtained after the negotiation with the MRBT platform.

427: The MRBT platform records the audio/video conversation of the calling and called users for the called user, according to the determination result that the called user subscribes for the conversation-recording service, or, the MRBT platform records the audio/video conversation of the calling and called users for the called user as actually required. A user who subscribes for the audio/video recording service may enter the MRBT platform (for example, via an access code) to operate, for example, delete or download, the audio/video conversation recorded.

It is determined whether the calling/called user subscribes for the video recording service according to an attribute of audio/video recording service configured in the MRBT platform. The MRBT platform is triggered to record the audio/video conversation between the calling terminal and the called terminal according to the video recording service subscribed. Thus, a video conversation between the calling and called users with a larger capacity may be recorded on the network side and missing an audio/video conversation due to user's misoperation may be avoided.

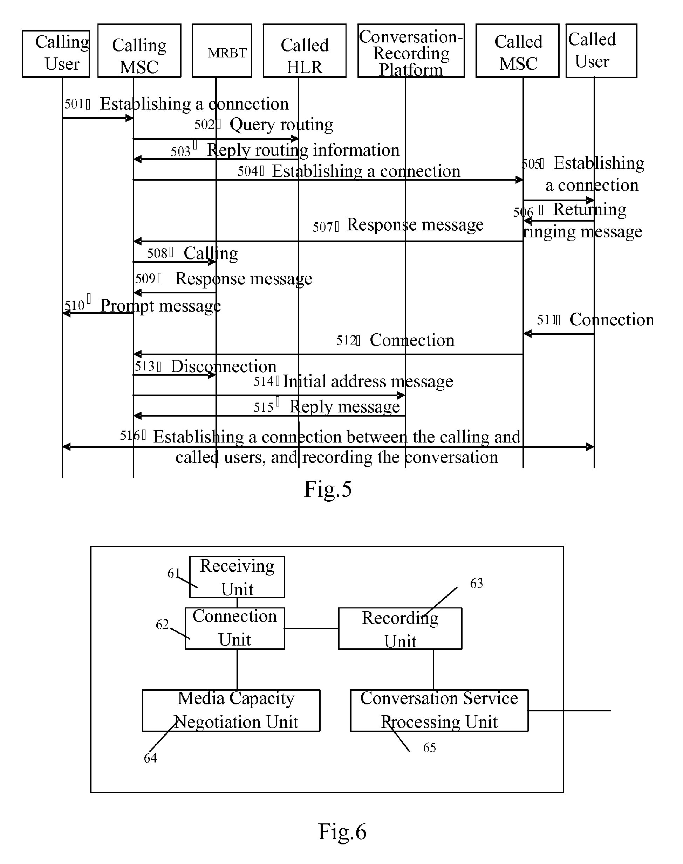

One embodiment of the invention further provides a method for recording a conversation. The conversation may be a video conversation or an audio conversation. Figure 5 shows a signaling flow chart of this embodiment. Compared with the embodiment shown in Figure 2, an MRBT platform is added, in other words, this embodiment describes a conversation established on MRBT call procedure and includes the following processes.

501: The calling MSC receives a connection establishment message from a calling user.

502: The calling MSC sends an SRI to the called HLR to query routing information of the called user.

503: The called HLR sends SRI reply information carrying the MRBT platform service code and the conversation-recording service code of the called user to the calling MSC.

504: The calling MSC sends a connection establishment request to the called MSC.

505: The called MSC sends a connection establishment request to the called terminal.

506: The called terminal starts ringing and returns a ringing message to the called MSC.

507: The called MSC returns a response message to the calling MSC.

508: The calling MSC initiates a call to the MRBT platform according to the MRBT platform service code.

509: The MRBT platform returns a response message to the calling MSC.

510: The calling MSC sends a prompt message to the calling terminal.

511: The called terminal answers the incoming call and sends a connection message to the called MSC.

512: The called MSC sends connect information to the calling MSC.

513: The calling MSC sends disconnection information to the MRBT platform.

514: The calling MSC initiates an IAM message to the conversation-recording platform according to the conversation-recording service code.

515: The conversation-recording platform sends a reply message to the calling MSC.

516: The conversation-recording platform establishes a call path connection between the calling and called users, and starts to record the conversation between the calling and called users. A user who subscribes for the audio/video recording service may enter the conversation-recording platform (for example, via an access code) to operate, for example, delete or download, the audio/video conversation recorded in the conversation-recording platform.

By adding a conversation-recording platform to the network, the video conversation between the calling terminal and the called terminal may be recorded, and missing an audio/video conversation due to user's misoperation may be avoided.

One embodiment of the invention further provides a conversation-recording platform. Referring to Figure 6, the conversation-recording platform includes the following units.

A receiving unit 61 is adapted to receive an audio/video call request carrying a conversation-recording service code which may be obtained by the calling MSC from the calling HLR or the called HLR. The conversation-recording service code obtained from the HLR is registered by the calling user or called user on respective HLR. In another mode, the calling user indicates that the user initiates a call of conversation-recording service by dialing an access number. The access number includes a called number and a conversation-recording service code which may be a prefix code configured before the called number (for example, a number indicating that conversation-recording service is initiated, such as 12530, is added before the called number), a suffix code configured behind the called number or a middle code configured in the middle of the called number. Moreover, the conversation-recording service code is not limited to a combination of numbers and may be configured as a combination of letters or other symbols as actually required.

A connection unit 62 is adapted to establish a conversation connection between the calling and called users according to the call request.

A recording unit 63 is adapted to record the conversation between the calling and called users during the conversation process of the calling and called users according to the conversation-recording service code. The conversation between the calling and called users may be recorded according to the conversation-recording service code of the calling or called user.

Further, for the video conversation, the conversation-recording platform may further include a media capacity negotiation unit 64 adapted to unify media formats of the conversation-recording platform and the calling and called terminals, and the conversation between the calling terminal and the called terminal is carried out in the same media format obtained by the negotiation of the media capacity negotiation unit 64.

Further, the conversation-recording platform may further include a conversation service processing unit 65 adapted to process the stored conversation according to a request from the calling/called user. For example, the calling or called user may enter the conversation-recording platform (for example, via an access number of the called terminal predetermined with conversation-recording platform) to perform related operation on the conversation stored, such as deleting or downloading.

The conversation-recording platform can automatically record a conversation between the calling terminal and the called terminal for the calling/called user, in other words, a larger conversation file may be stored on the network side and missing a conversation due to terminal user's misoperation may also be avoided.

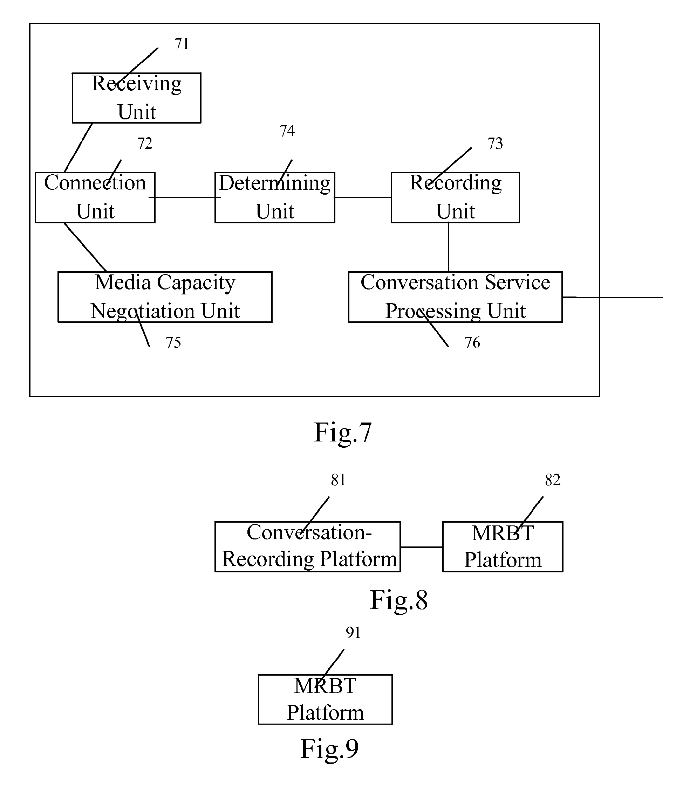

The conversation-recording platform may also be an MRBT platform. One embodiment of the invention further provides an MRBT platform for conversation-recording service. Referring to Figure 7, the MRBT platform includes the following units.

A receiving unit 71 is adapted to receive a call request which may be a video conversation call request or an audio conversation call request sent by the calling MSC.

A connection unit 72 is adapted to establish a conversation connection between the calling and called users according to the call request.

A determining unit 74 is adapted to determine whether the calling/called user subscribes for the conversation-recording service according to received information of the calling/called user and send a determination result of conversation-recording service subscription, after the connection unit establishes a conversation connection between the calling and called users.

A recording unit 73 is adapted to record the conversation between the calling and called users during the conversation of the calling and called users according to the determination result of conversation-recording service subscription received from the determining unit.

Further, the conversation-recording platform may further include a media capacity negotiation unit 75 adapted to unify media formats of the MRBT platform and the calling and called terminals. The conversation between the calling and called users is carried out in the same media format obtained by the negotiation of the media capacity negotiation unit 75. The recording unit records the video conversation between the calling and called users during the conversation between the calling and called users according to the media format obtained by the media capacity negotiation.

Further, the conversation-recording platform may further include a conversation service processing unit 76, adapted to process the stored conversation according to a request from the calling/called user. For example, the terminal user may enter the MRBT platform (for example, via an access number of the called terminal predetermined with the conversation-recording platform) for performing related operation on the conversation stored, such as deleting or downloading.

The MRBT platform can automatically record the conversation between the calling and called users for the calling/called user, in other words, a conversation file with larger capacity may be stored on the network side, and missing a conversation due to terminal user's misoperation may also be avoided.

One embodiment of the invention further provides a system for recording a conversation. Referring to Figure 8, the system includes the following.

A conversation-recording platform 81 is adapted to capture a call request such as an audio/video call request, establish a conversation connection between the calling and called users according to the audio/video call request, and record the conversation between the calling and called users during the conversation of the calling and called users. The call request carrying a conversation-recording service code may be sent by the calling MSC. The conversation-recording platform 81 records the conversation between the calling and called users during the conversation between the calling and called users according to the conversation-recording service code. The conversation-recording service code may be obtained by the MSC from the HLR. Another mode for obtaining the conversation-recording service code is that the conversation-recording service code is contained in the access number of the called user dial by the calling user. The access number includes the called number and the conversation-recording service code. The conversation-recording service code may be a prefix code configured before the called number (for example, a number indicating that conversation-recording service is initiated, such as 12530, is added before the called number), a suffix code configured behind the called number and a middle code configured in the middle of the called number. Moreover, the conversation-recording service code is not limited to a combination of numbers and may also be configured as a combination of letters or other symbols as actually required.

Moreover, the conversation-recording platform 81 is further used for negotiating the media capacity between the calling terminal and the called terminal, and the conversation between the calling and called users may be performed according to the media format negotiated.

This embodiment may further include an MRBT platform 82 adapted to receive a call request sent from an MSC according to the MRBT platform service code carried in the call request.

The system for recording a conversation can automatically record the conversation between the calling and called users for the calling/called user, in other words, a larger conversation file may be stored on the network side and missing a conversation due to a terminal user's misoperation may also be avoided.

The system for recording a conversation further includes: a conversation service processing unit, adapted to process the stored conversation according to a request from the calling/called user. For example, the calling or called user may enter the conversation-recording platform or the MRBT platform (for example, via an access number of the called terminal predetermined with conversation-recording platform) for performing related operation on the conversation stored, such as deleting or downloading. Alternatively, the conversation stored may also be queried and downloaded from the platform by another mode such as dialing the IVR/web. This is a modification of service only and is easy to implement, just as browsing an MRBT and downloading an MRBT. Thus repeated description thereof is omitted herein.

One embodiment of the invention further provides a system for recording a conversation. Referring to Figure 9, the system includes the following.

An MRBT platform 91 is adapted to establish a conversation connection between the calling and called users according to a call request received, determine whether the calling/called user subscribes for a conversation-recording service according to information of the calling/called user received, and record a conversation between the calling and called users during the conversation of the calling and called users according to a determination result of conversation-recording service subscription when it is determined that the conversation-recording service is subscribed.

The system for recording a conversation can automatically record the conversation between the calling and called users for the calling/called user; in other words, a larger conversation file may be stored on the network side and missing a conversation due to terminal user's misoperation may also be avoided.

The system for recording a conversation further includes: a conversation service processing unit, adapted to process the stored conversation according to a request from the calling/called user. For example, the calling or called user may enter the MRBT platform (for example, via an access number of the called terminal predetermined with conversation-recording platform) for performing related operation on the conversation stored such as deleting or downloading.

From the description of the above embodiments, those skilled in the art can understand that all or part of the steps for implementing the method according to the embodiments may be performed by instructing related hardware via a program. The software for implementing the embodiments of the invention may be stored in a computer (which may be a personal computer, server or network device)-readable storage medium. The storage medium may be Rom/Ram, magnetic disk or compact disk.

The method and system for recording a conversation, the conversation-recording platform and the MRBT platform according to the embodiments of the invention have been described in detail. However, various modifications and variations may be made by those skilled in the art without departing from the spirit or scope of the invention. Therefore, the invention in its broader aspects is not limited to the specific details and representative embodiments shown and described herein.

## Claims

1. A method for recording a conversation, comprising:
receiving a call request initiated by a calling user;
establishing a conversation connection between the calling user and a called user according to the call request; and
recording the conversation between the calling and called users during the conversation of the calling and called users.

2. The method for recording the conversation according to claim 1, wherein, the call request carries a conversation-recording service code from an HLR or an access number of the call request carries the conversation-recording service code; and
recording the conversation between the calling and called users comprises: recording the conversation between the calling and called users according to the conversation-recording service code.

3. The method for recording the conversation according to claim 1, further comprising:
determining whether the calling/called user subscribes for a conversation-recording service according to received information of the calling/called user;
if it is determined the calling/called user subscribes for a conversation-recording service , the step of recording the conversation between the calling and called users further comprises: recording the conversation between the calling and called users according to the determination result of conversation-recording service subscription.

4. The method for recording the conversation according to claim 1 or 3, wherein, the call request is a video call request; the method for recording the conversation further comprises:
performing a media capacity negotiation with the calling terminal and the called terminal; and
recording the conversation between the calling and called users during the conversation of the calling and called users comprises: recording the video conversation between the calling and called users during the video conversation of the calling and called users in accordance with a media format obtained by the media capacity negotiation.

5. A conversation-recording platform, comprising:
a receiving unit adapted to receive a call request from a calling user;
a connection unit adapted to establish a conversation connection between the calling user and a called user according to the call request; and
a recording unit adapted to record a conversation between the calling and called users during the conversation of the calling and called users.

6. The conversation-recording platform according to claim 5, wherein:
the call request received by the receiving unit carries a conversation-recording service code; and
the recording unit is adapted to record the conversation between the calling and called users during the conversation of the calling and called users according to the conversation-recording service code.

7. The conversation-recording platform according to claim 5 or 6, wherein:
the call request received by the receiving unit is a video call request;
the conversation-recording platform further comprises a media capacity negotiation unit adapted to perform a media capacity negotiation with a calling terminal and a called terminal; and
the recording unit is adapted to record a video conversation between the calling and called users during the conversation between the calling and called users in accordance with a media format obtained by the media capacity negotiation.

8. The conversation-recording platform according to claim 7, wherein, the conversation-recording platform further comprises:
a conversation service processing unit adapted to process the conversation recorded on the recording unit according to a request from the calling/called user.

9. The conversation-recording platform according to claim 5, wherein, the conversation-recording platform further comprises:
a determining unit adapted to determine whether the calling/called user subscribes for a conversation-recording service according to received information of the calling/called user and send a determination result of conversation-recording service subscription; and
the recording unit is adapted to record the conversation between the calling and called users during the conversation of the calling and called users according to the determination result of conversation-recording service subscription from the determining unit.

10. A system for recording a conversation, comprising a conversation-recording platform of claim 6, wherein the call request further carries an MRBT service code; and the system for recording the conversation further comprises: an MRBT platform adapted to receive the call request from a Mobile Switching Center, MSC, and play an MRBT according to the MRBT service code carried in the call request.
